# EUROPEAN PATENT APPLICATION

(11) **EP 1 403 203 A1**
(43) Date of publication of application: **31.03.2004**
(21) Application number: 01947855.1
(22) Date of filing: 05.07.2001
(51) Int. Cl.: B66B 11/08, F16D 65/09, F16D 51/12

(54) **ELEVATOR HOIST AND BRAKE DEVICE OF THE ELEVATOR HOIST**

(71) Applicant: MITSUBISHI DENKI KABUSHIKI KAISHA, Tokyo 100-8310 (JP)
(72) Inventor: OKADA, Koji, c/o Mitsubishi Denki K.K., Tokyo 100-8310 (JP); MATSUKAWA, Koei, c/o Mitsubishi Denki K.K., Tokyo 100-8310 (JP); HIRONAKA, Yasuo, c/o Mitsubishi Denki K.K., Tokyo 100-8310 (JP); YUMURA, Takashi, c/o Mitsubishi Denki K.K., Tokyo 100-8310 (JP)
(74) Representative: HOFFMANN - EITLE
(86) International application number: PCT/JP2001/005849
(87) International publication number: WO 2003/004400

(57) **Abstract**

In a brake device of an elevator hoist, there is provided between a brake arm and a brake shoe an elastically deformable gap maintaining member for maintaining a gap between the brake shoe and the drum at the time of brake release. The gap maintaining member regulates the rocking of the brake shoe at the time of brake release. At the time of braking, it undergoes elastic deformation to thereby permit the rocking of the brake shoe.

## Description

### TECHNICAL FIELD

This invention relates to an elevator hoist having a drive sheave around which a main rope is wrapped and a drum type brake device provided in the elevator hoist and adapted to brake the rotation of the drive sheave.

### BACKGROUND ART

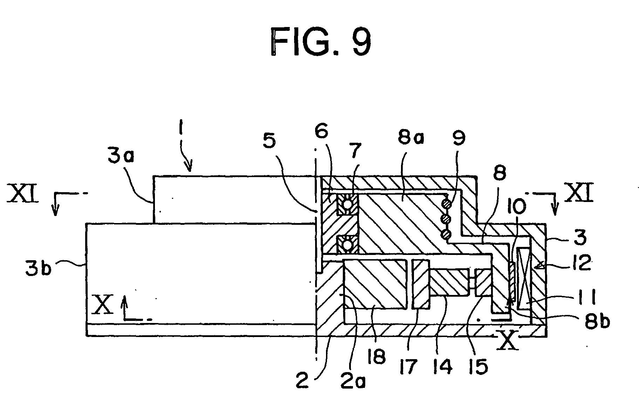

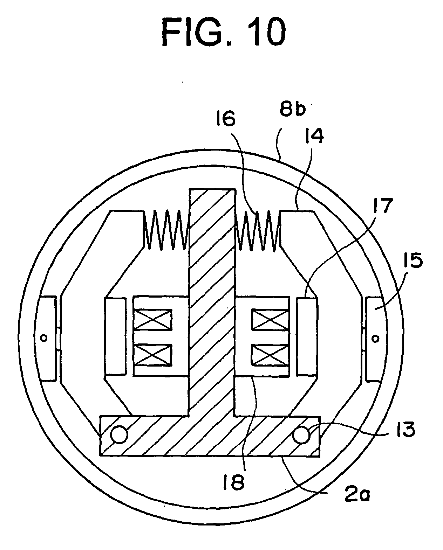

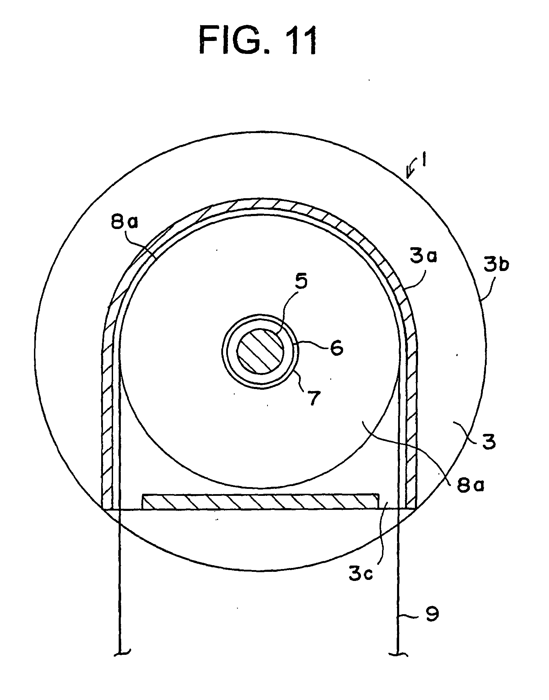

Fig. 9 is a half section of a conventional elevator hoist, Fig. 10 is a sectional view taken along the line X-X of Fig. 9, and Fig. 11 is a sectional view taken along the line XI-XI of Fig. 9.

In the drawings, a case 1 has a flat base 2 and a cover 3 mounted to the base 2. The base 2 has a T-shaped protrusion 2a formed integrally therewith. A shaft 5 is fixed between the protrusion 2a and the cover 3. A hub 6 is fixed to the outer peripheral portion of the shaft 5. The shaft 5 and the hub 6 are members which do not rotate.

A rotating body 8 rotatable around the shaft 5 is mounted to the outer peripheral portion of the hub 6 through the intermediation of a bearing 7. The rotating body 8 has a drive sheave 8a and a cylindrical drum 8b formed integrally with the drive sheave 8a and having a diameter larger than that of the drive sheave main body 8a. A main rope 9 for suspending a car and a balance weight is wrapped around the outer peripheral portion of the drive sheave 8a. The cover 3 has a sheave cover portion 3a covering the drive sheave 8a and a drum cover portion 3b covering the drum 8b.

A plurality of motor magnets 10 are fixed to the outer peripheral portion of the drum 8b. Fixed to the inner peripheral surface of the drum cover 3b are a plurality of stator coils 11 opposed to the motor magnets 10. A driving motor 12 has the motor magnets 10 and the stator coils 11. The rotating body 8 is rotated by the driving force of the driving motor 12.

Mounted on the protrusion 2a are a pair of brake arms 14 rockable around pins 13. A brake shoe 15 is rockably supported by each brake arm 14. The brake shoes 15 are moved toward and away from the inner peripheral surface of the drum 8b.

Provided between the brake arms 14 and the protrusion 2a are a pair of brake springs 16 urging the brake arms 14 so as to press the brake shoes 15 against the drum 8b. An armature 17 is fixed to each brake arm 14. Fixed to the side surfaces of the protrusion 2a are a pair of electromagnets 18 opposed to the armatures 17.

Next, the operation of the elevator hoist will be described. When the armatures 17 are attracted by the electromagnets 18, the brake arms 14 are rocked against the force of the brake springs 16, and the brake shoes 15 are separated from the drum 8b. In this brake release state, the rotating body 8 can be rotated around the shaft 5 by the driving force of the driving motor 12, and the car and the balance weight suspended by the main rope 9 ascend and descend.

By canceling the attraction of the armatures 17 by the electromagnets 18, the brake shoes 15 are pressed against the drum 8b by the spring force of the brake springs 16, whereby the rotation of the rotating member 8 is braked.

Since the brake shoes 15 are rockable with respect to the brake arms 14, the braking surfaces (brake linings) of the brake shoes 15 are uniformly pressed against the inner peripheral surface of the drum 8b, whereby it is possible to obtain a stable braking force.

In this conventional elevator hoist, the brake shoes 15 collide with the drum 8b with great impact, resulting in generation of noise.

In this connection, the smaller the gap between the brake shoes 15 and the drum 8b at the time of brake release, the lower the noise at the time of braking. It is to be noted, however, that the brake shoes 15 are rockable with respect to the brake arms 14; when the gap is reduced, there is the danger of brake shoes 15 coming into contact with the drum 8b at the time of brake release as well due to rotation runout of the drum 8b and vibration of the brake shoes 15.

Further, since similar elevator hoists are applied to elevators of various layouts, the angle at which the main rope 9 is drawn out from the drive sheave 8a differs depending upon the elevator layout. In view of this, as shown in Fig. 11, the size of the main rope outlet 3c of the sheave cover portion 3a is made considerably larger as compared with the diameter of the main rope 9. Thus, noise generated in the brake device is allowed to escape to the exterior through the main rope outlet 3c.

### DISCLOSURE OF THE INVENTION

This invention has been made with a view toward solving the above problems. It is an object of this invention to provide an elevator hoist and a brake device thereof capable of achieving a reduction in noise.

To this end, according to one aspect of the present invention, there is provided a brake device of an elevator hoist provided in an elevator hoist having a driving motor and a drive sheave around which a main rope is wrapped and which is rotated by the driving force of the driving motor, and adapted to brake the rotation of the drive sheave, comprising: a cylindrical drum rotated with the drive sheave; a brake arm rockably supported by a stationary portion of the elevator hoist; a brake shoe rockably supported by the brake arm and adapted to move toward and away from the inner peripheral surface of the drum through rocking of the brake arm; a brake spring urging the brake arm in such a direction as to press the brake shoe against the drum; and an electromagnet for separating the brake shoe from the drum against the force of the brake spring, wherein between the brake arm and the brake shoe, there is provided an elastically deformable gap maintaining member for maintaining a gap between the brake shoe and the drum at the time of brake release, the gap maintaining member regulating the rocking of the brake shoe at the time of brake release and permitting the rocking of the brake shoe by undergoing elastic deformation at the time of braking.

According to another aspect of the present invention, there is provided a brake device of an elevator hoist provided in an elevator hoist having a driving motor and a drive sheave around which a main rope is wrapped and which is rotated by the driving force of the driving motor, and adapted to brake the rotation of the drive sheave, comprising: a cylindrical drum rotated with the drive sheave; a brake arm rockably supported by a stationary portion of the elevator hoist; a brake shoe rockably supported by the brake arm and adapted to move toward and away from the inner peripheral surface of the drum through rocking of the brake arm; a brake spring urging the brake arm in such a direction as to press the brake shoe against the drum; and an electromagnet for separating the brake shoe from the drum against the force of the brake spring, wherein between the stationary portion and the brake arm, there is provided a damper for mitigating a collision impact of the brake shoe to the drum at the time of braking.

According to a still further aspect of the present invention, there is provided an elevator hoist comprising: a hoist main body having a driving motor, a drive sheave around which a main rope is wrapped and which is rotated by the driving force of the driving motor, and a brake device for braking the rotation of the drive sheave; and a case having a main rope outlet through which the main rope is drawn out and covering the hoist main body, wherein the case is equipped with a closing member capable of adjusting the opening area of the main rope outlet.

According to a still further aspect of the present invention, there is provided an elevator hoist comprising: a hoist main body having a driving motor, a drive sheave around which a main rope is wrapped and which is rotated by the driving force of the driving motor, and a brake device for braking the rotation of the drive sheave; and a case having a main rope outlet through which the main rope is drawn out and covering the hoist main body, wherein a soundproof duct surrounding the main rope is connected to the main rope outlet.

### BRIEF DESCRIPTION OF THE DRAWINGS

Fig. 1 is a sectional view of a main portion of an elevator hoist according to Embodiment 1 of this invention;
Fig. 2 is a sectional view taken along the line II-II of Fig. 1;
Fig. 3 is a sectional view of a brake device of an elevator hoist according to Embodiment 2 of this invention;
Fig. 4 is a sectional view of a brake device of an elevator hoist according to Embodiment 3 of this invention;
Fig. 5 is a half section of an elevator hoist according to Embodiment 4 of this invention;
Fig. 6 is a sectional view taken along the line VI-VI of Fig. 5;
Fig. 7 is a sectional view of a main portion of an elevator hoist according to Embodiment 5 of this invention;
Fig. 8 is a sectional view of a main portion of an elevator hoist according to Embodiment 6 of this invention;
Fig. 9 is a half section of a conventional elevator hoist;
Fig. 10 is a sectional view taken along the line X-X of Fig. 9; and
Fig. 11 is a sectional view taken along the line XI-XI of Fig. 9.

### BEST MODE FOR CARRYING OUT THE INVENTION

Preferred embodiments of this invention will now be described with reference to the drawings.

### Embodiment 1

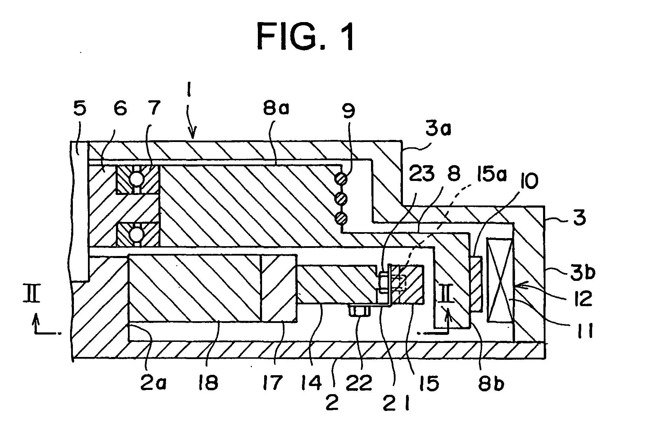

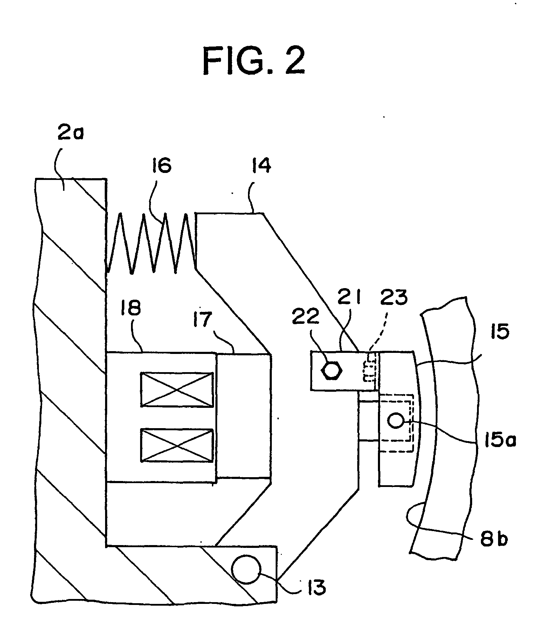

Fig. 1 is a sectional view of a main portion of an elevator hoist according to Embodiment 1 of this invention, and Fig. 2 is a sectional view taken along the line II-II of Fig. 1.

In the drawings, a case 1 has a flat base 2 and a cover 3 mounted to the base 2. The base 2 has a T-shaped protrusion 2a formed integrally therewith. A shaft 5 is fixed between the protrusion 2a and the cover 3. A hub 6 is fixed to the outer peripheral portion of the shaft 5. The shaft 5 and the hub 6 are members which do not rotate. That is, the stationary portion of the elevator hoist has the case 1, the shaft 5, and the hub 6.

A rotating body 8 rotatable around the shaft 5 is mounted to the outer peripheral portion of the hub 6 through the intermediation of a bearing 7. The rotating body 8 has a drive sheave 8a and a cylindrical drum 8b formed integrally with the drive sheave 8a and having a diameter larger than that of the drive sheave main body 8a. Amain rope 9 for suspending a car and a balance weight is wrapped around the outer peripheral portion of the drive sheave 8a. The cover 3 has a sheave cover portion 3a covering the drive sheave 8a and a drum cover portion 3b covering the drum 8b.

Aplurality of motor magnets 10 are fixed to the outer peripheral portion of the drum 8b. Fixed to the inner peripheral surface of the drum cover 3b are a plurality of stator coils 11 opposed to the motor magnets 10. A driving motor 12 has the motor magnets 10 and the stator coils 11. The rotating body 8 is rotated by the driving force of the driving motor 12.

Mounted on the protrusion 2a are a pair of brake arms 14 rockable around pins 13. A brake shoe 15 is rockably supported around a rocking shaft 15a by each brake arm 14. The brake shoes 15 are moved toward and away from the inner peripheral surface of the drum 8b by the rocking of the brake arms 14.

Provided between the brake arms 14 and the protrusion 2a are a pair of brake springs 16 urging the brake arms 14 so as to press the brake shoes 15 against the drum 8b. An armature 17 is fixed to each brake arm 14. Fixed to the side surfaces of the protrusion 2a are a pair of electromagnets 18 opposed to the armatures 17.

Between the brake arms 14 and the brake shoes 15, there are provided elastically deformable gap maintaining members 21 for maintaining gaps between the braking surfaces (brake linings) of the brake shoes 15 and the inner peripheral surface of the drum 8b at the time of brake release. The gap maintaining members 21 regulate the rocking of the brake shoes 15 at the time of brake release; at the time of braking, they undergo elastic deformation to permit rocking of the brake shoes 15.

The gap maintaining members 21 consist of metal plate springs. Further, the gap maintaining members 21 have an L-shaped section, and are fastened to the brake arms 14 and the brake shoes 15 by means of bolts 22 and 23. The gaps between the brake shoes 15 and the drum 8c at the time of brake release are maintained by the gap maintaining members 21 so as to be uniform over the entire braking surfaces of the brake shoes 15.

The brake device of Embodiment 1 has the drum 8b, the pins 13, the brake arms 14, the brake shoes 15, the brake springs 16, the armatures 17, the electromagnets 18, the gap maintaining members 21, and the bolts 22 and 23. The hoist main body has the driving motor 12, the drive sheave 8a, and the brake device.

Next, the operation of the elevator hoist will be described. When the armatures 17 are attracted by the electromagnets 18, the brake arms 14 are rocked against the force of the brake springs 16, and the brake shoes 15 are separated from the drum 8b. In this brake release state, the rotating body 8 is rotated around the shaft 5 by the driving force of the driving motor 12, and the car and the balance weight suspended by the main rope 9 ascend and descend.

By canceling the attraction of the armatures 17 by the electromagnets 18, the brake shoes 15 are pressed against the drum 8b by the spring force of the brake springs 16, whereby the rotation of the rotating member 8 is braked.

In this brake device, the rocking of the brake shoe 15 is regulated by the gap maintaining members 21. That is, the brake shoes 15 do not rock unless a force large enough to cause elastic deformation of the gap maintaining members 21 is applied to the brake shoes 15. Thus, even if the gaps between the brake shoes 15 and the drum 8b are reduced, the gaps are maintained by the gap maintaining members 21, and there is no danger of the brake shoes 15 coming into contact with the drum 8b due to rotation runout of the drum 8b and rocking of the brake shoes 15.

The resilient force of the brake springs 16 is sufficiently larger than the resilient force of the gap maintaining members 21, so that at the time of braking, the gap maintaining members 21 undergo elastic deformation, thereby permitting rocking of the brake shoes 15 when they abut the drum 8b. That is, the brake shoes 15 are rocked against the resilient force of the gap maintaining members 21. Thus, the braking surfaces of the brake shoes 15 are uniformly pressed against the inner peripheral surface of the drum 8b, making it possible to obtain a stable braking force.

As described above, it is possible to reduce the gaps between the brake shoes 15 and the drum 8b at the time of brake release to thereby mitigate the noise at the time of braking. Further, since L-shaped plate springs are used as the gap maintaining members 21, simplification in structure can be attained. Further, since the gaps between the brake shoes 15 and the drum 8c are made uniform over the entire braking surfaces of the brake shoes 15, it is possible to mitigate the noise at the time of braking more effectively.

### Embodiment 2

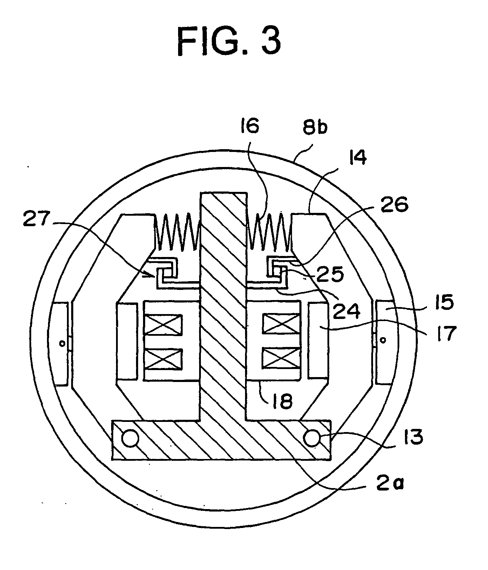

Next, Fig. 3 is a sectional view of a brake device of an elevator hoist according to Embodiment 2 of this invention. In the drawing, a pair of mounting members 24 are fixed to the protrusion 2a. Fixed to each mounting member 24 is a buffer member 25 consisting of a visco-elastic material such as rubber. Fixed to each brake arm 14 is an abutting member 26 abutting the buffer member 25 at the time of braking. A damper 27 according to Embodiment 2 has the mounting member 24, the buffer member 25, and the abutting member 26. Otherwise, this embodiment is of the same construction as Embodiment 1.

In this brake device, at the time of braking, the impact when the brake shoes 15 collide with the drum 8b is absorbed and mitigated by the buffer members 25, whereby it is possible to reduce the noise generated at the time of braking.

### Embodiment 3

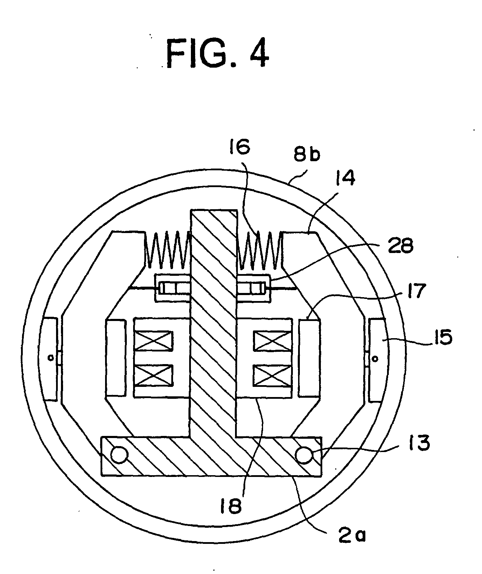

Next, Fig. 4 is a sectional view of a brake device of an elevator hoist according to Embodiment 3 of this invention. In the drawing, between the protrusion 2a and the brake arms 14, there are provided a pair of fluid buffers 28 serving as dampers. At the time of braking, the fluid buffers 28 mitigate the impact when the brake shoes 15 collide with the drum 8b. As the fluid buffers 28, hydraulic buffers, for example, are used. Otherwise, this embodiment is of the same construction as Embodiment 1.

In this brake device, at the time of braking, the impact when the brake shoes 15 collide with the drum 8b is mitigated by the fluid buffers 28, whereby it is possible to reduce the noise generated at the time of braking.

### Embodiment 4

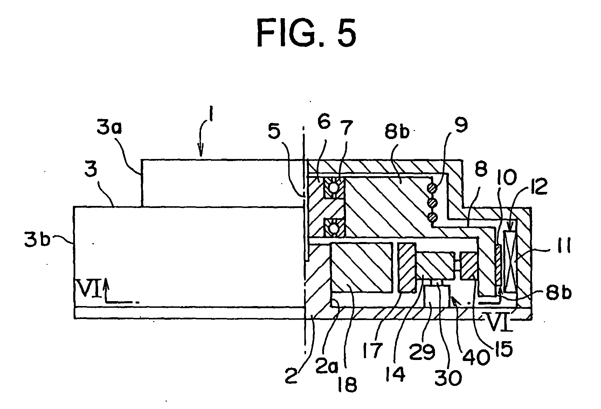

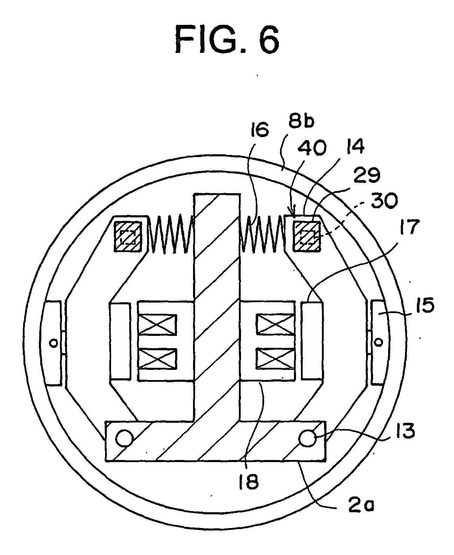

Fig. 5 is a half section of an elevator hoist according to Embodiment 4 of this invention, and Fig. 6 is a sectional view taken along the line VI-VI of Fig. 5. In the drawings, fixed to the base 2 as the stationary portion are a pair of retaining members 29 opposed to the side surfaces of the end portions of the brake arms 14 on the side opposite to the pins (rocking centers). Retained by each retaining member 29 is a friction member 30 held in contact with the side surface of the brake arm 14. A friction buffer 40 as a damper has the retaining member 29 and the friction member 30. Otherwise, this embodiment is of the same construction as Embodiment 1.

In this brake device, at the time of braking, the friction members 30 offer frictional resistance to the rocking movement of the brake arms 14, whereby the impact at the time of the collision of the brake shoes 15 with the drum 8b is mitigated, making it possible to reduce the noise generated at the time of braking.

The friction members 29 are formed, for example, of a material such as resin which is superior in stability in coefficient of friction. For example, it is possible to form the friction members 29 of ultrahigh molecular weight polyethylene.

The friction members 30 may be held in contact with any portion; the farther they are from the pins 13, the longer they can secure the contact stroke for the brake arms 14.

### Embodiment 5

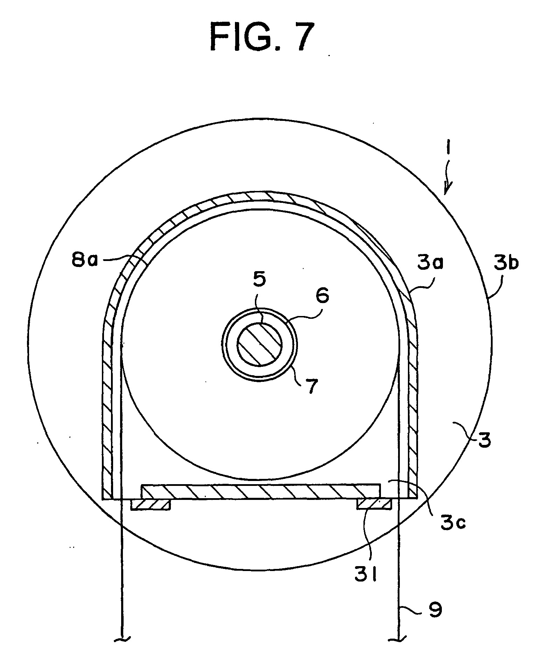

Next, Fig. 7 is a sectional view of a main portion of an elevator hoist according to Embodiment 5 of this invention. In the drawing, the sheave cover portion 3a is equipped with a pair of main rope outlets 3c through which the main rope 9 is drawn out and a pair of closing members 31 capable of adjusting the opening area of the main rope outlets 3c. The closing members 31 are formed, for example, of metal plates like the case 1. The closing members 31 are slidingly displaced, whereby the opening area of the main rope outlets 3c can be adjusted.

In this elevator hoist, when the draw-out angle of the main rope 9 allows a reduction in the opening area of the main rope outlets 3c without interfering with the main rope 9, the positions of the closing members 31 are adjusted so as to make the opening area of the main rope outlets 3c as small as possible, whereby it is possible to keep noise generated in the hoist main body including the brake device from escaping to the exterior through the main rope outlets 3c.

### Embodiment 6

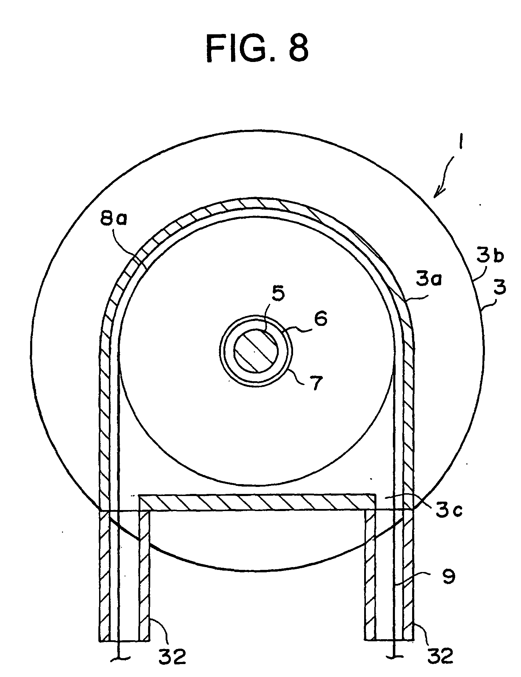

Next, Fig. 8 is a sectional view of a main portion of an elevator hoist according to Embodiment 6 of this invention. In the drawing, the sheave cover portion 3a is equipped with a pair of main rope outlets 3c through which the main rope 9 is drawn out. Connected to each main rope outlet 3c is a soundproof duct 32 surrounding the main rope 9.

In this elevator hoist, the soundproof ducts 32 are connected to the main rope outlets 3c, so that it is possible to restrain noise generated in the hoist main body including the brake device from escaping to the exterior through the main rope outlets 3c.

## Claims

1. A brake device of an elevator hoist provided in an elevator hoist having a driving motor and a drive sheave around which a main rope is wrapped and which is rotated by the driving force of the driving motor, and adapted to brake the rotation of the drive sheave, comprising:
a cylindrical drum rotated with the drive sheave;
a brake arm rockably supported by a stationary portion of the elevator hoist;
a brake shoe rockably supported by the brake arm and adapted to move toward and away from the inner peripheral surface of the drum through rocking of the brake arm;
a brake spring urging the brake arm in such a direction as to press the brake shoe against the drum; and
an electromagnet for separating the brake shoe from the drum against the force of the brake spring,
wherein between the brake arm and the brake shoe, there is provided an elastically deformable gap maintaining member for maintaining a gap between the brake shoe and the drum at the time of brake release, the gap maintaining member regulating the rocking of the brake shoe at the time of brake release and permitting the rocking of the brake shoe by undergoing elastic deformation at the time of braking.

2. A brake device of an elevator hoist according to Claim 1, wherein the gap maintaining member is formed of a plate spring.

3. A brake device of an elevator hoist according to Claim 1, wherein the gap between the brake shoe and the drum at the time of brake release is kept uniform over the entire braking surface of the brake shoe.

4. A brake device of an elevator hoist provided in an elevator hoist having a driving motor and a drive sheave around which a main rope is wrapped and which is rotated by the driving force of the driving motor, and adapted to brake the rotation of the drive sheave, comprising:
a cylindrical drum rotated with the drive sheave;
a brake arm rockably supported by a stationary portion of the elevator hoist;
a brake shoe rockably supported by the brake arm and adapted to move toward and away from the inner peripheral surface of the drum through rocking of the brake arm;
a brake spring urging the brake arm in such a direction as to press the brake shoe against the drum; and
an electromagnet for separating the brake shoe from the drum against the force of the brake spring,
wherein between the stationary portion and the brake arm, there is provided a damper for mitigating a collision impact of the brake shoe to the drum at the time of braking.

5. A brake device of an elevator hoist according to Claim 4, wherein the damper has a buffer member consisting of a visco-elastic material absorbing the impact.

6. A brake device of an elevator hoist according to Claim 4, wherein the damper is a fluid buffer.

7. A brake device of an elevator hoist according to Claim 4, wherein the damper is a friction buffer.

8. An elevator hoist comprising:
a hoist main body having a driving motor, a drive sheave around which a main rope is wrapped and which is rotated by the driving force of the driving motor, and a brake device for braking the rotation of the drive sheave; and
a case having a main rope outlet through which the main rope is drawn out and covering the hoist main body,
wherein the case is equipped with a closing member capable of adjusting the opening area of the main rope outlet.

9. An elevator hoist comprising:
a hoist main body having a driving motor, a drive sheave around which a main rope is wrapped and which is rotated by the driving force of the driving motor, and a brake device for braking the rotation of the drive sheave; and
a case having a main rope outlet through which the main rope is drawn out and covering the hoist main body,
wherein a soundproof duct surrounding the main rope is connected to the main rope outlet.

## Amended claims

### Amended claims under Art. 19.1 PCT

**1.** A brake device of an elevator hoist provided in an elevator hoist having a driving motor (12) and a drive sheave (8a) around which a main rope (9) is wrapped and which is rotated by the driving force of the driving motor (12), and adapted to brake the rotation of the drive sheave (8a), comprising:
a cylindrical drum (8b) rotated with the drive sheave (8a);
a brake arm (14) rockably supported by a stationary portion (2a) of the elevator hoist;
a brake shoe (15) rockably supported by the brake arm (14) and adapted to move toward and away from the inner peripheral surface of the drum (8b) through rocking of the brake arm (14);
a brake spring (16) urging the brake arm (14) in such a direction as to press the brake shoe (15) against the drum (8b); and
an electromagnet (18) for separating the brake shoe (15) from the drum (8b) against the force of the brake spring (16),
wherein between the brake arm (14) and the brake shoe (15), there is provided an elastically deformable gap maintaining member (21) for maintaining a gap between the brake shoe (15) and the drum (8b) at the time of brake release, the gap maintaining member (21) regulating the rocking of the brake shoe (15) at the time of brake release and permitting the rocking of the brake shoe (15) by undergoing elastic deformation at the time of braking.

**2.** A brake device of an elevator hoist according to Claim 1, wherein the gap maintaining member (21) is formed of a plate spring.

**3.** A brake device of an elevator hoist according to Claim 1, wherein the gap between the brake shoe (15) and the drum (8b) at the time of brake release is kept uniform over the entire braking surface of the brake shoe (15).

**4.** A brake device of an elevator hoist provided in an elevator hoist having a driving motor (12) and a drive sheave (8a) around which a main rope (9) is wrapped and which is rotated by the driving force of the driving motor (12), and adapted to brake the rotation of the drive sheave (8a), comprising:
a cylindrical drum (8b) rotated with the drive sheave (8a);
a brake arm (14) rockably supported by a stationary portion (2a) of the elevator hoist;
a brake shoe (15) rockably supported by the brake arm (14) and adapted to move toward and away from the inner peripheral surface of the drum (8b) through rocking of the brake arm (14);
a brake spring (16) urging the brake arm (14) in such a direction as to press the brake shoe (15) against the drum (8b); and
an electromagnet (18) for separating the brake shoe (15) from the drum (8b) against the force of the brake spring (16),
wherein between the stationary portion (2a) and the brake arm (14), there is provided a damper (27, 28, 40) for mitigating a collision impact of the brake shoe (15) to the drum (8b) at the time of braking.

**5.** A brake device of an elevator hoist according to Claim 4, wherein the damper (27) has a buffer member (25) consisting of a visco-elastic material absorbing the impact.

**6.** A brake device of an elevator hoist according to Claim 4, wherein the damper (28) is a fluid buffer (28).

**7.** A brake device of an elevator hoist according to Claim 4, wherein the damper (40) is a friction buffer (40).

**8.** An elevator hoist comprising:
a hoist main body having a driving motor (12), a drive sheave (8a) around which a main rope (9) is wrapped and which is rotated by the driving force of the driving motor (12), and a brake device for braking the rotation of the drive sheave (8a); and
a case (1) having a main rope outlet (3c) through which the main rope (9) is drawn out and covering the hoist main body,
wherein the case is equipped with a closing member (31) capable of adjusting the opening area of the main rope outlet (3c).

**9.** An elevator hoist comprising:
a hoist main body having a driving motor (12), a drive sheave (8a) around which a main rope (9) is wrapped and which is rotated by the driving force of the driving motor (12), and a brake device for braking the rotation of the drive sheave (8a); and
a case (1) having a main rope outlet (3c) through which the main rope (9) is drawn out and covering the hoist main body,
wherein a soundproof duct (32) surrounding the main rope (9) is connected to the main rope outlet (3c).
